# FASCICULE DE BREVET EUROPEEN

(11) **EP 3 728 428 B1**
(45) Date de publication et mention de la délivrance du brevet: **09.03.2022**
(21) Numéro de dépôt: 18839697.2
(22) Date de dépôt: 17.12.2018
(51) Int. Cl.: C08J 9/02, C08L 67/02, C08J 9/00

(54) **PROCEDE DE FABRICATION DE MOUSSES POLYESTER THERMODURCIES A BASE DE SUCRES HYDROGENES**
VERFAHREN ZUR HERSTELLUNG VON WÄRMEHÄRTBARE POLYESTERSCHÄUMEN AUF BASIS VON HYDRIERTEN ZUCKERN
METHOD FOR PRODUCING THERMOSET POLYESTER FOAMS BASED ON HYDROGENATED SUGARS

(30) Priorité: 18.12.2017 FR 1762336
(43) Date de publication de la demande: 28.10.2020
(73) Titulaire: SAINT-GOBAIN ISOVER, 92400 Courbevoie (FR)
(72) Inventeur: SALOMON, Pierre, 92400 Courbevoie (FR); SAVONNET, Marie, 75018 Paris (FR)
(74) Mandataire: Saint-Gobain Recherche
(86) Numéro de dépôt international: PCT/FR2018/053351
(87) Numéro de publication internationale: WO 2019/122669

(56) Documents cités:
- EP-A1- 2 628 757
- WO-A1-2016/207517

## Description

La présente invention concerne des mousses solides thermodurcies obtenues par réaction et moussage chimique d'une composition expansible contenant un composant polyol à base de sucre hydrogéné en C₄-C₆, un composant polyacide à base de polyacide porogène, en particulière d'acide citrique, un agent tensioactif et un catalyseur d'estérification.

Il est connu de préparer des mousses polyester thermodurcies par réaction d'un polyol et d'un polyacide.

Dans la demande WO2010/059925, un polyester hautement réticulé est obtenu en deux étapes : la première étape consiste à former un prépolymère non réticulé par réaction d'un polyol et d'un polyacide à une première température relativement peu élevée et la deuxième étape à réticuler le prépolymère soit à une deuxième température plus élevée que la première, soit à température modérée en présence d'un agent de réticulation ou d'un catalyseur de polymérisation (estérification). L'absence du catalyseur à la première étape semble être essentielle pour pouvoir mettre en œuvre ce procédé en deux étapes.

Certains polymères durcis sont décrits comme des mousses. Leur masse volumique est toutefois relativement élevée (Exemple 12 : 350 kg/m³ ; Exemple 16 : 190 kg/m³). L'utilisation d'agents moussants physiques ou chimiques est envisagée (voir [0040]).

La demande internationale WO2012/052385 décrit un polymère expansé obtenu par réaction de glycérol et d'acide citrique à une température comprise entre 80 et 130°C jusqu'à ce que le taux de conversion soit au moins égal à 90 %, éventuellement en présence d'un catalyseur d'estérification. Lorsqu'un taux de conversion d'au moins 90 %, de préférence 98 %, est atteint, le mélange réactionnel est chauffé à une température plus élevée, voisine de 150 °C. La première étape à basse température est destinée à éviter dans la mesure du possible la décarboxylation de l'acide citrique.

Le procédé décrit dans ce document nécessite des temps réactionnels très longs, allant de plusieurs heures à plusieurs dizaines d'heures. La polymérisation est mise en œuvre de préférence dans des moules anti-adhésifs, par exemple en Teflon. Les mousses ainsi obtenues ont une masse volumique comprises entre 200 et 850 g/litre.

La demande internationale WO2013/121033 décrit un perfectionnement de ce procédé où la polymérisation du glycérol et de l'acide citrique est mise en œuvre au contact d'un substrat avec une couche externe comprenant au moins un métal, un oxyde métallique ou un halogénure métallique. Ce procédé fournit des mousses présentant une taille des pores plus régulière que celles préparées par le procédé décrit dans WO 2012/052385. Les masses volumiques revendiquées sont comprises entre 50 et 850 g/litre. Les mousses préparées dans les exemples selon l'invention présentent des masses volumiques comprises entre 282 g/litre et 482 g/litre.

La demande internationale WO2016/207517, au nom de la Demanderesse, divulgue un procédé de fabrication de mousses polyester par thermodurcissement à une température au moins égale à 135 °C, d'une composition expansible et thermodurcissable contenant
- un composant polyol comprenant au moins un élément choisi parmi le glycérol, le diglycérol et les oligomères de glycérol,
- un composant polyacide comprenant de l'acide citrique,
- un agent tensioactif, et
- un catalyseur.

Les mousses obtenues ont une porosité fine et des masses volumiques faibles, comprises entre 20 et 120 g/litre.

Des essais de dégradation à haute température de ces mousses à base de glycérol ont montré que les fumées de décomposition thermique contenaient de l'acroléine, un composant irritant et toxique par inhalation et ingestion.

La présente invention est basée sur la découverte qu'il était possible de remplacer le glycérol et ses oligomères par des sucres hydrogénés en C₄-C₆ dans la fabrication de mousses polyesters à base de réactifs biosourcés. Les mousses polyester obtenues ont un aspect, une masse volumique et des performances thermiques et mécaniques équivalentes à celles à base de glycérol et d'acide citrique décrites dans la demande WO2016/207517 mais les fumées, produites par dégradation thermique à 350 °C, contenaient cent fois moins d'acroléine que les mousses à base de glycérol et d'acide citrique.

La présente invention a par conséquent pour objet un procédé de fabrication d'une mousse polyester thermodurcie, comprenant les étapes successives suivantes :
(a) mise à disposition d'une composition expansible et thermodurcissable contenant
   - un composant polyol comprenant au moins 40 % en poids d'un sucre hydrogéné de formule CₙH₂ₙ₊₂Oₙ où n vaut 4, 5 ou 6,
   - un composant polyacide comprenant un polyacide porogène choisi de préférence parmi l'acide citrique et les acides dicarboxyliques α-hydroxylés de formule (I)

      HOOC-(CHR¹)ₙ-CHOH-COOH

      où
      n est un entier allant de 1 - 4, de préférence de 1 - 3, en particulier 1 ou 2, et de manière tout particulièrement préférée 1, et
      chaque R¹ représente indépendamment un atome d'hydrogène, un groupe hydroxyle (-OH) ou un groupe alkyle, de préférence un groupe alkyle en C₁₋₄,
   - un agent tensioactif, et
   - un catalyseur,
(b) introduction de la composition expansible et thermodurcissable dans un moule ou application de la composition expansible sur un support,
(c) chauffage de la composition expansible et thermodurcissable à une température au moins égale à 135 °C, de préférence au moins égale à 150 °C, de manière à faire réagir le composant polyol avec le composant polyacide et à former un bloc de mousse polyester thermodurcie.

L'invention a également pour objet l'utilisation d'une composition contenant
- un composant polyol comprenant au moins 40 % en poids d'un sucre hydrogéné de formule CₙH₂ₙ₊₂Oₙ où n vaut 4, 5 ou 6,
- un composant polyacide comprenant un polyacide porogène choisi de préférence parmi l'acide citrique et les acides dicarboxyliques α-hydroxylés de formule (I)

   HOOC-(CHR¹)ₙ-CHOH-COOH

   où
   n est un entier allant de 1 - 4, de préférence de 1 - 3, en particulier 1 ou 2, et de manière tout particulièrement préférée 1, et
   chaque R¹ représente indépendamment un atome d'hydrogène, un groupe hydroxyle (-OH) ou un groupe alkyle, de préférence un groupe alkyle en C₁₋₄,
- un agent tensioactif, et
- un catalyseur,
en tant que composition expansible et thermodurcissable pour la fabrication d'un produit isolant de type mousse.

La composition expansible thermodurcissable utilisée dans la présente invention comprend donc quatre composants essentiels : le composant polyol, le composant polyacide, l'agent tensioactif et le catalyseur.

Le composant polyacide peut comprendre des polyacides différents de l'acide citrique ou des acides dicarboxyliques α-hydroxylés et le composant polyol peut comprendre des polyols, c'est-à-dire des composés polyhydroxylés, différents des sucre hydrogéné de formule CₙH₂ₙ₊₂Oₙ où n vaut 4, 5 ou 6. Des exemples d'autres polyacides et polyols seront donnés ci-après.

Dans la présente demande, les quantités ou teneurs en composants polyol ou polyacide s'entendent toujours pour l'ensemble des polyols ou pour l'ensemble des polyacides présents dans la composition.

Cette définition des composants polyols et polyacides n'exclut pas la possibilité que certains tensioactifs soient considérés comme faisant partie des composants polyols ou polyacides. C'est le cas par exemple des alkylpolyglycosides (APG) qui font partie des agents tensioactifs préférés. Les alkylpolyglycosides comportent un ou plusieurs motifs de sucres (motifs polyhydroxylés) et jouent à la fois le rôle d'agent tensioactif en modulant et contrôlant la porosité des mousses obtenues, et le rôle de polyols susceptibles de participer à la formation d'un réseau tridimensionnel durci par réaction avec les groupes acide du composant polyacide.

Dans la présente invention lorsqu'un composé, présent dans la composition expansible et thermodurcissable, peut être considéré à la fois comme un premier des quatre composants essentiels *et* comme un deuxième des quatre composants essentiels de la composition (composant polyol, composant polyacide, agent tensioactif, catalyseur d'estérification) il sera considéré à la fois comme l'un et comme l'autre. Cela implique qu'il sera pris en compte dans les quantités de chacun de ces deux composants.

Ainsi, une composition expansible et thermodurcissable contenant
48 % en poids de sorbitol (sucre hydrogéné en C₆),
47 % en poids d'acide citrique,
3 % en poids d'alkylpolyglycosides et
2 % en poids d'un catalyseur d'estérification
aura une teneur en composant polyol égale à 51 % (48 % sorbitol + 3 % d'alkylpolyglycoside), une teneur en composant polyacide égale à 47 %, une teneur en agent tensioactif égale à 3 % et une teneur en catalyseur d'estérification égale à 2 %. La somme numérique de ces quatre composants est alors bien entendu supérieure à 100 % car les 3 % d'alkylpolyglycosides sont comptabilisés doublement.

Le premier composant essentiel de la composition expansible est le composant polyol. Ce composant comprend au moins 40 % en poids d'un sucre hydrogéné de formule CₙH₂ₙ₊₂Oₙ où n vaut 4, 5 ou 6.

On entend par sucres hydrogénés, également appelés « alditols » ou « alcools de sucres », les produits d'hydrogénation d'hydrates de carbone où le groupe aldéhyde ou cétone a été réduit en fonction -OH. Les sucres hydrogénés utilisés dans la présente invention comportent 4, 5 ou 6 atomes de carbone.

Les sucres hydrogénés sont de préférence choisis dans le groupe constitué d'érythritol (C₄), tréitol (C₄), arabitol (C₅), xylitol (C₅), ribitol (C₅), mannitol (C₆), sorbitol (C₆), galactitol (C₆), fucitol (C₆) et iditol (C₆). On utilisera de préférence du sorbitol, du mannitol, du xylitol et/ou de l'érythritol.

Le composant polyol comprend de préférence au moins 50 % en poids, en particulier au moins 60 % en poids, plus préférentiellement au moins 80 %, et idéalement au moins 90 % en poids d'un sucre hydrogéné de formule CₙH₂ₙ₊₂On où n vaut 4, 5 ou 6.

Le composant polyol peut donc contenir jusqu'à 60 % en poids, de préférence jusqu'à 50 % en poids, en particulier jusqu'à 40 % en poids, plus préférentiellement jusqu'à 20 % en poids et idéalement jusqu'à 10 % en poids, exprimés par rapport au poids sec total du composant polyol, de polyols différents des sucres hydrogénés de formule CₙH₂ₙ₊₂Oₙ ci-dessus.

Ces autres polyols sont de préférence également des molécules biosourcées, par exemples des sucres réducteurs ou non-réducteurs.

On entend par sucres réducteurs les hydrates de carbone de formule C*ₙ*(H₂O)*ₚ* présentant au moins un groupe aldéhyde ou cétone (groupe réducteur). Les sucres réducteurs utilisables dans la présente invention englobent les oses (monosaccharides) et les osides (disaccharides, oligosaccharides et polysaccharides).

A titre d'exemples de monosaccharides, on peut citer ceux comportant de 4 à 8 atomes de carbone, de préférence les aldoses et avantageusement les aldoses contenant 5 à 7 atomes de carbone. Les aldoses particulièrement préférés sont les aldoses naturels (appartenant à la série D), notamment les hexoses tels que le glucose, le mannose et le galactose.

Le lactose ou le maltose sont des exemples de disaccharides utilisables en tant que sucres réducteurs.

On pourra également utiliser de manière avantageuse des hydrolysats d'amidon obtenus par hydrolyse enzymatique ou hydrolyse acide d'amidon.

Les sucres non-réducteurs utilisables sont le saccharose et le tréhalose.

Le composant polyol peut également contenir d'autres sucres hydrogénés tels que l'isomaltitol ou le maltitol qui sont des dimères.

En raison de la toxicité des fumées de dégradation thermique, et en particulier du dégagement d'acroléine, la composition expansible et thermodurcissable contient de préférence peu ou pas de glycérol, de diglycérol et d'oligomères de glycérol, c'est-à-dire qu'elle contient moins de 1 % en poids, de préférence moins de 0,1 % en poids de glycérol, de diglycérol ou d'oligomères de glycérol, exprimé par rapport au poids sec total de la composition. La composition expansible est de préférence exempte de glycérol, de diglycérol et d'oligoglycérol.

Les inventeurs pensent qu'il est également préférable de ne pas utiliser des sucres ou alcools de sucres contenant trois atomes de carbone.

Enfin, le composant polyol peut également contenir une certaine fraction de diols (glycols) aliphatiques, susceptibles de modifier les propriétés mécaniques des mousses obtenues, en particulier d'augmenter la flexibilité des mousses obtenus. On peut citer à titre d'exemples de tels diols le 1,3-propane-diol, 1,4 butane-diol, 1,5-pentanediol, 1,6-hexanediol, 1,8-octanediol et les isomères de ceux-ci.

Le deuxième composant essentiel de la composition expansible est le composant polyacide. Le composant polyacide comprend au moins un polyacide porogène. Ce polyacide porogène est un acide qui comporte au moins deux fonctions carboxyle et qui, dans les conditions de thermodurcissement de la mousse, se dégrade et libère un composant gazeux (généralement du CO₂) qui permet l'expansion de la composition et la formation de la mousse.

L'acide citrique est connu pour son pouvoir porogène et est l'acide porogène préféré.

La Demanderesse a mis en évidence récemment que d'autres acides dicarboxyliques pouvaient remplacer partiellement ou totalement l'acide citrique en tant qu'agent porogène. La demande française 16 62370 non encore publiée au moment du dépôt de la présente demande, décrit en détail ces acides porogènes choisis parmi les acides dicarboxyliques α-hydroxylés et leur utilisation pour la formation de mousses biosourcées.

Les acides dicarboxyliques α-hydroxylés sont de préférence l'acide tartrique (HOOC-CHOH-CHOH-COOH) et l'acide malique (HOOC-CH₂-CHOH-COOH).

Le composant polyacide comprend de préférence au moins 50 % en poids, en particulier au moins 65 % en poids et idéalement au moins 80 % en poids de polyacide porogène, de préférence d'acide citrique, rapporté au poids total du composant polyacide.

D'autres polyacides, c'est-à-dire des polyacides non-porogènes,susceptibles de réagir avec le composant polyol pour former un réseau de polyester peuvent être présents. Ces autres polyacides sont de préférence des polyacides monomères, autrement dit des polyacides qui ne sont pas formés par polymérisation de motifs monomères portant des groupes acide tels que le poly(acide acrylique).

Des polyacides oligomères de faibles poids moléculaire, tels que le poly(acide maléique) peuvent toutefois être utilisés sans problème.

Les autres polyacides sont de préférence des acides polycarboxyliques, par exemple des acides dicarboxyliques, tricarboxyliques ou tétracarboxyliques.

Les acides dicarboxyliques englobent, par exemple, l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique. Les acides dicarboxyliques englobent également les anhydrides correspondants.

Les acides tricarboxyliques englobent, par exemple, l'acide tricarballylique, l'acide 1,2,4-butanetricarboxylique, l'acide aconitique, l'acide hémimellitique, l'acide triméllitique et l'acide trimésique.

On peut citer comme acide tétracarboxylique, par exemple l'acide 1,2,3,4-butane-tétracarboxylique et l'acide pyroméllitique.

Les composants polyol et polyacide tels que définis ci-dessus représentent, ensemble, au moins 60 %, de préférence au moins 70 % et en particulier au moins 80 % du poids sec de la composition expansible et thermodurcissable.

Le composant polyol représente de préférence de 15 à 60 % en poids, en particulier de 20 à 50 % en poids et idéalement de 25 à 45 % en poids du poids total des composants polyol et polyacide. Il en découle logiquement que le composant polyacide représente de préférence de 40 à 85 % en poids, en particulier de 50 à 80 % en poids, et idéalement de 55 à 75 % en poids du poids total des composants polyol et polyacide.

De manière connue, on ajustera les quantités respectives des composants polyol et polyacide de manière à ce que les fonctions -OH et les fonctions -COOH soient présentes en un rapport molaire -OH/-COOH compris entre 0,60 et 1,8, de préférence entre 0,70 et 1,6, en particulier entre 0,8 et 1,4.

Le troisième composant essentiel de la composition expansible et thermodurcissable est un agent tensioactif. Dans la présente demande ce terme englobe également des mélanges de plusieurs agents tensioactifs.

La fonction de cet ingrédient est d'améliorer la qualité de la mousse, c'est-à-dire de réduire la taille des pores, de resserrer la distribution de la taille des pores et de réduire la masse volumique des mousses durcies obtenues.

L'agent tensioactif présente de préférence une balance hydrophile/lipophile (HLB) comprise entre 3 et 13, de préférence entre 5 et 8.

Dans un mode de réalisation, l'agent tensioactif est un mélange d'un tensioactif anionique et d'un tensioactif cationique. Dans le domaine des mousses aqueuses liquides, il est connu qu'une association de deux types d'agents tensioactifs de charges opposées permet de stabiliser le film de tensioactifs à l'interface eau/air en réduisant la répulsion entre molécules de même charge. Comme il sera montré ci-après dans les exemples, la Demanderesse a obtenu d'excellents résultats avec un mélange de dodécylsulfate de sodium (SDS) et de bromure de tétradécyltriméthyl ammonium (TTAB) ou de bromure de cétrimonium (CTAB) et l'utilisation d'une association de ces deux types agents tensioactifs constitue donc un mode de réalisation préféré. Le rapport en poids TTAB/SDS ou CTAB/SDS est de préférence compris entre 1,5 et 2,5, en particulier entre 1,8 et 2,2 et idéalement proche de 2.

Les agents tensioactifs non-ioniques constituent une alternative intéressante à l'association d'un tensioactif anionique et d'un tensioactif cationique. En effet, pour les agents tensioactifs non-ioniques, il n'existe pas de forces de répulsion entre têtes hydrophiles de même charge et certains tensioactifs non-ioniques sont de ce fait particulièrement appropriés pour la formation de mousses de bonne qualité. Les agents tensioactifs non-ioniques utilisés dans la présente invention ont de préférence une HLB comprise entre 3 et 13.

C'est le cas par exemple des alkylpolyglycosides (APG) qui sont des molécules comportant une tête hydrophile formée d'un ou de plusieurs motifs de sucre, greffée de chaîne grasse alkyle.

Les alkylpolyglycosides comportent de préférence entre 1 et 2 motifs glucoside et les chaînes alkyle comportent de préférence de 8 à 14 atomes de carbone et sont de préférence des chaînes alkyle linéaires.

On peut citer à titre d'exemples d'alkylpolyglycosides les produits de la marque Glucopon, notamment le Glucopon 600 CSUP (lauryl glucoside) et le Glucopon 650 EC (coco glucoside).

La quantité de l'agent tensioactif représente avantageusement de 0,1 à 10 %, de préférence de 1 à 8 % et en particulier de 2 à 6 % du poids sec total de la composition expansible.

Le quatrième ingrédient essentiel de la composition expansible et thermodurcissable utilisée dans le procédé de la présente invention est un catalyseur d'estérification. Ce catalyseur est de préférence, mais pas nécessairement, un composé contenant du phosphore. On peut citer à titre d'exemples de catalyseurs phosphorés préférés ceux choisis dans le groupe constitué de hypophosphite de métal alcalin (H₂PO₂M), phosphite de métal alcalin (HPO₃M₂), polyphosphate de métal alcalin (M₃PO₄), hydrogénophosphate de métal alcalin (M₂HPO₄), acide phosphorique (H₃PO₄), acide alkylphosphonique (RPO₃H₂) et un mélange de deux ou plusieurs de ces composés. L'hypophosphite de métal alcalin est particulièrement préféré.

La concentration du catalyseur est typiquement comprise entre 0,1 et 10 % en poids, de préférence entre 1 et 8 % en poids, et en particulier entre 2 à 6 % en poids, rapporté au poids sec de la composition expansible.

Le mélange des quatre composants essentiels décrits ci-dessus est avantageusement une solution. Pour obtenir la dissolution de l'ensemble des ingrédients il peut être utile d'ajouter une certaine quantité d'eau. L'eau peut également servir à fluidifier la composition afin de faciliter son écoulement ou son étalement au cours de l'étape (b) du procédé de l'invention. On cherchera toutefois généralement à limiter la quantité d'eau dans la composition expansible car la réaction d'estérification ne débutera qu'après évaporation complète de l'eau et l'évaporation de l'eau présente un coût énergétique indésirable.

La composition expansible contiendra donc avantageusement au plus 50 % en poids, de préférence au plus 25 % en poids, plus préférentiellement au plus 15 % en poids et en particulier au plus 5 % en poids d'eau, rapporté au poids total de la composition expansible.

La composition expansible utilisée dans la présente invention peut contenir en outre jusqu'à 30 % en poids, de préférence jusqu'à 20 % en poids, en particulier jusqu'à 10 % en poids, rapportés au poids sec de la composition expansible totale, d'une ou plusieurs charges minérales ou organiques.

Enfin, la composition expansible peut contenir un ou plusieurs autres additifs utilisés classiquement dans l'industrie de la mise en œuvre et transformation des polymères tels que des colorants, pigments, agents anti-bactériens ou anti-fongiques, agents ignifugeants, absorbeurs UV, agents hydrophobes. Ces additifs représentent au total de préférence au plus 10 % du poids sec de la composition.

Bien que la composition expansible puisse contenir, en principe, un agent d'expansion organique tel que le pentane, il est important de noter qu'il n'est pas nécessaire d'en ajouter.

En effet, le polyacide porogène, en particulier l'acide citrique, présent dans le composant polyacide, joue le rôle d'agent d'expansion. Lorsque la composition expansible est chauffée, à l'étape (c), à une température proche de 170 °C, l'acide citrique se décompose, de manière connue, en acide aconitique et CO₂ (M. M. Barbooti et al. « Thermal Decomposition of Citric Acid », Thermochimica Acta, 98 (1986), 119-126; D. Wyrzykowski et al. "Thermal Behavior of Citric Acid and Isomeric Aconitic Acids", J. Therm. Anal. Calorim. (2001), 104 :731-735). Il sera montré ci-après dans les exemples de réalisation que des mousses de bonne qualité et de faible masse volumique peuvent être obtenues en l'absence de tout agent d'expansion physique. Lorsque l'étape (c) est mise en œuvre à une température supérieure à 170 °C, l'ajout d'un agent d'expansion organique est donc superflu. Dans un mode de réalisation préféré du procédé de la présente invention, la composition expansible est donc essentiellement exempte d'agent d'expansion physique organique.

Lorsque la composition expansible est étalée sous forme d'une couche continue sur un support, l'épaisseur de la couche, avant chauffage, c'est-à-dire avant expansion et durcissement, est avantageusement au moins égale à 1 mm, de préférence au moins égale à 2 mm, en particulier au moins égale à 5 mm, et plus préférentiellement au moins égale à 10 mm.

Le volume du bloc de mousse formé peut varier entre de très larges limites. Lorsque la composition expansible est utilisée dans un procédé continu formant par exemple des bandes ou profilés de matériaux isolants, il est potentiellement infini. Lorsque la composition expansible est utilisée pour former des blocs discrets, par exemple des plaques ou feuilles de mousses, sa quantité est de préférence telle que le volume de chaque bloc de mousse solide thermodurcie soit au moins égal à 500 cm³, de préférence au moins égal à 0,001 m³, en particulier au moins égal à 0,01 m³.

Le bloc de mousse se présente de préférence sous forme d'une plaque.

Pour chauffer la composition expansible à l'étape (c) on pourra utiliser en principe n'importe quel moyen usuel connu dans le domaine de la mise en œ uvre et transformation des polymères, tels que l'air chaud, le rayonnement thermique, les micro-ondes ou la mise en contact avec un support chaud (moule).

Bien entendu, la température du moyen de chauffage (étuve, support, moule) pourra être supérieure à la température réactionnelle mentionnée ci-dessus, par exemple comprise entre 160 et 250 °C.

La durée de l'étape de chauffage (étape (c)) dépend non seulement de la température, mais également du moyen de chauffage et du rapport volume/surface du bloc de mousse formé. Elle est généralement comprise entre 10 minutes et 8 heures, de préférence entre 20 minutes et 7 heures et en particulier entre 30 minutes et 6 heures.

La présente invention a également pour objet une mousse polyester solide susceptible d'être obtenue par le procédé objet de la présente invention.

Leur masse volumique est comprise entre 20 et 120 kg/m³, de préférence entre 30 et 100 kg/m³, en particulier entre 35 et 80 kg/m³.

Elles présentent une porosité fine ouverte avec un diamètre moyen des pores, déterminé par tomographie à rayons X, compris entre 100 et 800 µm. Malgré la porosité ouverte, la résistance au passage de l'air est infinie.

### Exemples

On prépare plusieurs compositions expansibles thermodurcissables en ajoutant de l'acide citrique en poudre à une solution aqueuse contenant le sucre hydrogéné en C₄, C₅ ou C₆ ou l'un des polyols comparatifs Les quantités respectives d'acide citrique et de polyol sont indiquées dans le Tableau 1 ci-après.

On ajoute ensuite 5 parts de catalyseur d'estérification (hypophosphite de sodium monohydraté) sous forme de poudre. Une solution aqueuse d'agent tensioactif (6 parts d'un mélange de SDS et de TTAB (SDS/TTAB = 2)) est ajouté après dissolution complète des autres ingrédients, puis on ajuste l'extrait sec du mélange à 67% en poids.

La solution réactive est ensuite versée dans des moules en aluminium à fond plat (diamètre de 20 cm). L'épaisseur de la couche liquide est d'environ 1 mm. Les moules sont chauffés pendant 1 h 30 dans une étuve ventilée thermostatée à 180°C.

Après sortie des moules de l'étuve et refroidissement des mousses formées jusqu'à température ambiante, on évalue visuellement la qualité de la mousse formée à l'aide de l'échelle de notation suivante :
- : Peu moussée (hauteur de mousse inférieur à 1,5 cm)
+ : Mousse très inhomogène, présence d'au moins une cellule de plus de 2 cm
++ : Mousse non-homogène, présence de nombreuses cellules de l'ordre de 0,5 cm
+++ : Présence de quelques cellules de l'ordre de 0,5 cm
++++ : Mousse très homogène, la taille des cellules est difficilement mesurable visuellement

**Tableau 1**

| Nature Polyol | Quantité Polyol (parts) | Quantité Acide citrique (parts) | Qualité de la mousse | Masse volumique (kg/m³) | Conductivité thermique* (mW/(K.m)) |
|---|---|---|---|---|---|
| Référence Glycérol (C₃H₈O₃) | 26 | 74 | ++++ | 30 | 35,5 |
| Erythritol (C₄H₁₀O₄) | 25 | 75 | +++ | | |
| | 28 | 72 | +++ | | |
| | 35 | 65 | ++++ | 40 | 33,5 |
| Xylitol (C₅H₁₂O₅) | 25 | 75 | +++ | | |
| | 35 | 65 | ++++ | 34 | 36,6 |
| | 37 | 63 | ++++ | | |
| Sorbitol (C₆H₁₄O₆) | 38 | 62 | ++++ | 29 | 34,7 |
| Mannitol (C₆H₁₄O₆) | 25 | 75 | ++ | | |
| | 31 | 69 | +++ | | |
| | 38 | 62 | ++++ | | |
| Penta-érythritol (C₅H₁₂O₄) | 28 | 72 | + | | |
| Trimethylolpropan e (C₆H₁₄O₃) | 35 | 65 | + | | |
| Isomalt (C₁₂H₂₄O₁₁) | 30 | 70 | - | | |
| | 36 | 64 | - | | |
| | 48 | 52 | + | | |
| Maltitol (C₁₂H₂₄O₁₁) | 41 | 59 | - | | |
| | 30 | 70 | + | | |

| | | | | | |
|---|---|---|---|---|---|
| * déterminée selon ISO 8301/NF EN 1946-3 | | | | | |

On peut constater que les mousses obtenues par réaction d'acide citrique avec des sucres hydrogénés en C₄, C₅ et C₆ donnent des mousses de bonne qualité ayant des masses volumiques et des conductivités thermiques comparables à celles de la mousse de référence de l'état de la technique (WO2016/207517) à base d'acide citrique et de glycérol.

Le sucre hydrogéné représente de préférence au moins 25 %, mieux encore au moins 30 % du poids sec de la composition expansible.

D'autres polyols ayant des masses moléculaires de même ordre de grandeur ne donnent pas de mousses ou des mousses de qualité médiocre.

On soumet ensuite la mousse à base de glycérol et la mousse à base de sorbitol du tableau 1 à des essais de dégradation thermique à 350 °C conformément au protocole AFAP-3 (NATO Reaction-to-Fire Tests for Materials, Allied Fire Assessment Publication, Troisième édition Juillet 2010).

Le Tableau 2 montre la concentration en acroléine (exprimée en ppm/100 g/m³) détectée dans les fumées émises.

**Tableau 2**

| | Essai 1 | Essai 2 | Essai 3 | Essai 4 | Moyenne |
|---|---|---|---|---|---|
| Mousse Glycérol | 870 | 1007 | 1072 | 867 | 955 |
| Mousse Sorbitol | 10 | 9 | - | - | 9,5 |

On peut constater que le remplacement du glycérol par du sorbitol donne des mousses présentant une masse volumique et une conductivité thermique équivalente mais qui émettent cent fois mois d'acroléine.

## Revendications

1. Procédé de fabrication d'une mousse polyester thermodurcie, comprenant les étapes successives suivantes :
(a) mise à disposition d'une composition expansible et thermodurcissable contenant
- un composant polyol comprenant au moins 40 % en poids d'un sucre hydrogéné de formule CₙH₂ₙ₊₂Oₙ où n vaut 4, 5 ou 6,
- un composant polyacide comprenant un polyacide porogène choisi de préférence parmi l'acide citrique et les acides dicarboxyliques α-hydroxylés de formule (I)
HOOC-(CHR¹)ₙ-CHOH-COOH
où
n est un entier allant de 1 - 4, de préférence de 1 - 3, en particulier 1 ou 2, et de manière tout particulièrement préférée 1, et
chaque R¹ représente indépendamment un atome d'hydrogène, un groupe hydroxyle (-OH) ou un groupe alkyle, de préférence un groupe alkyle en C₁₋₄,
- un agent tensioactif, et
- un catalyseur,
(b) introduction de la composition expansible et thermodurcissable dans un moule ou application de la composition expansible sur un support,
(c) chauffage de la composition expansible et thermodurcissable à une température au moins égale à 135 °C, de préférence au moins égale à 150 °C, de manière à faire réagir le composant polyol avec le composant polyacide et à former un bloc de mousse polyester thermodurcie.

2. Procédé selon la revendication 1, **caractérisé par le fait que** la composition expansible et thermodurcissable contient moins de 1 % en poids, de préférence moins de 0,1 % en poids de glycérol, de diglycérol ou d'oligomères de glycérol.

3. Procédé selon la revendication 1 ou 2, **caractérisé par le fait que** le composant polyol et le composant polyacide représentent ensemble au moins 60 %, de préférence au moins 70 % et en particulier au moins 80 % du poids sec de la composition expansible et thermodurcissable, les quantités ou teneurs en composants polyol ou polyacide s'entendant pour l'ensemble des polyols ou pour l'ensemble des polyacides présents dans la composition.

4. Procédé selon l'une des revendications précédentes, **caractérisé par le fait que** le composant polyol comprend au moins 50 % en poids, de préférence au moins 60 % en poids, plus préférentiellement au moins 80 %, et idéalement au moins 90 % en poids d'un sucre hydrogéné de formule CₙH₂ₙ₊₂Oₙ où n vaut 4, 5 ou 6.

5. Procédé selon l'une des revendications précédentes, **caractérisé par le fait que** le composant polyacide comprend au moins 50 % en poids, de préférence au moins 65 % en poids et en particulier au moins 80 % en poids de polyacide porogène.

6. Procédé selon l'une des revendications précédentes, **caractérisé par le fait que** le polyacide porogène est choisi dans le groupe constitué de l'acide tartrique, l'acide malique et l'acide citrique, de préférence l'acide citrique.

7. Procédé selon l'une quelconque des revendications précédentes, **caractérisé par le fait que** l'agent tensioactif est un mélange d'un tensioactif anionique et d'un tensioactif cationique, de préférence un mélange de dodécylsulfate de sodium (SDS) et de bromure de tétradécyltriméthyl ammonium (TTAB) ou un mélange de dodécylsulfate de sodium et de bromure de cétrimonium (CTAB).

8. Procédé selon l'une quelconque des revendications 1 à 5, **caractérisé par le fait que** l'agent tensioactif est choisi parmi les alkylpolyglycosides.

9. Procédé selon l'une quelconque des revendications précédentes, **caractérisé par le fait que** le composant polyol représente de 15 à 60 %, de préférence de 20 à 50 % et en particulier de 25 à 45 % du poids total des composants polyol et polyacide.

10. Procédé selon l'une quelconque des revendications précédentes, **caractérisé par le fait que** la composition expansible contient au plus 50 % en poids, de préférence au plus 25 % en poids, plus préférentiellement au plus 15 % en poids et en particulier au plus 5 % en poids d'eau.

11. Procédé selon l'une quelconque des revendications précédentes, **caractérisé par le fait que** le catalyseur est choisi parmi les composés contenant du phosphore, de préférence dans le groupe constitué de hypophosphite de métal alcalin, phosphite de métal alcalin, polyphosphate de métal alcalin, hydrogénophosphate de métal alcalin, acide phosphorique, acide alkylphosphonique et un mélange de deux ou plusieurs de ces composés, en particulier l'hypophosphite de métal alcalin.

12. Procédé selon l'une quelconque des revendications précédentes, **caractérisé par le fait que** la composition expansible contient en outre jusqu'à 30 % en poids, de préférence jusqu'à 20 % en poids, en particulier jusqu'à 10 % en poids, rapportés au poids sec de la composition expansible totale, d'une ou plusieurs charges minérales ou organiques.

13. Mousse polyester obtenue par le procédé selon l'une quelconque des revendications précédentes.

14. Mousse polyester selon la revendication 13, **caractérisée par le fait qu'**elle présente une masse volumique comprise entre 20 et 120 kg/m³, de préférence entre 30 et 100 kg/m³, en particulier entre 35 et 80 kg/m³.

15. Utilisation d'une composition contenant
- un composant polyol comprenant au moins 40 % en poids d'un sucre hydrogéné de formule CₙH₂ₙ₊₂Oₙ où n vaut 4, 5 ou 6,
- un composant polyacide comprenant un polyacide porogène choisi de préférence parmi l'acide citrique et les acides dicarboxyliques α-hydroxylés de formule (I)
HOOC-(CHR¹)ₙ-CHOH-COOH
où
n est un entier allant de 1 - 4, de préférence de 1 - 3, en particulier 1 ou 2, et de manière tout particulièrement préférée 1, et
chaque R¹ représente indépendemment un atome d'hydrogène, un groupe hydroxyle (-OH) ou un groupe alkyle, de préférence un groupe alkyle en C₁₋₄,
- un agent tensioactif, et
- un catalyseur d'estérification,
en tant que composition expansible et thermodurcissable pour la fabrication d'un produit isolant de type mousse.

## Patentansprüche

1. Verfahren zur Herstellung eines wärmegehärteten Polyesterschaums, umfassend die folgenden aufeinanderfolgenden Schritte:
(a) Bereitstellen einer expandierbaren und wärmehärtbaren Zusammensetzung, enthaltend
- eine Polyolkomponente, die zu mindestens 40 Gew.-% einen hydrierten Zucker nach der Formel CₙH₂ₙ₊₂Oₙ, worin n gleich 4, 5 oder 6 ist, umfasst
- eine Polysäurekomponente, umfassend eine porenbildende Polysäure, vorzugsweise ausgewählt aus Zitronensäure und α-hydroxylierten Dicarbonsäuren nach der Formel (I)
HOOC-(CHR¹)ₙ-CHOH-COOH,
worin
n eine ganze Zahl von 1 bis 4, vorzugsweise von 1 bis 3, insbesondere 1 oder 2 und ganz besonders bevorzugt 1 ist und
jedes R¹ unabhängig ein Wasserstoffatom, eine Hydroxylgruppe (-OH) oder eine Alkylgruppe, vorzugsweise eine C₁₋₄-Alkylgruppe, darstellt, und
- ein Tensid und
- einen Katalysator
(b) Einführen der expandierbaren und wärmehärtbaren Zusammensetzung in eine Form oder Aufbringen der expandierbaren Zusammensetzung auf einen Träger
(c) Erhitzen der expandierbaren und wärmehärtbaren Zusammensetzung auf eine Temperatur von mindestens 135 °C, vorzugsweise mindestens 150 °C, um die Polyolkomponente mit der Polysäurekomponente umzusetzen und einen Block aus wärmegehärtetem Polyesterschaum zu bilden.

2. Verfahren nach Anspruch 1, **dadurch gekennzeichnet, dass** die expandierbare und wärmehärtbare Zusammensetzung weniger als 1 Gew.-%, vorzugsweise weniger als 0,1 Gew.-%, Glycerin, Diglycerin oder Glycerinoligomere enthält.

3. Verfahren nach Anspruch 1 oder 2, **dadurch gekennzeichnet, dass** die Polyolkomponente und die Polysäurekomponente zusammen mindestens 60 %, vorzugsweise mindestens 70 % und insbesondere mindestens 80 % des Trockengewichts der expandierbaren und wärmehärtbaren Zusammensetzung ausmachen, wobei die Mengen oder Gehalte der Polyol- oder Polysäurekomponenten für die Gesamtheit der Polyole oder für die Gesamtheit der Polysäuren zu verstehen sind, die in der Zusammensetzung vorhanden sind.

4. Verfahren nach einem der vorstehenden Ansprüche, **dadurch gekennzeichnet, dass** die Polyolkomponente zu mindestens 50 Gew.-%, vorzugsweise mindestens 60 Gew.-%, mehr bevorzugt mindestens 80 Gew.-% und idealerweise mindestens 90 Gew.-% eines hydrierten Zuckers nach der Formel CₙH₂ₙ₊₂Oₙ, worin n gleich 4, 5 oder 6 ist, umfasst.

5. Verfahren nach einem der vorstehenden Ansprüche, **dadurch gekennzeichnet, dass** die Polysäurekomponente zu mindestens 50 Gew.-%, vorzugsweise zu mindestens 65 Gew.-% und insbesondere zu mindestens 80 Gew.-% porenbildende Polysäure umfasst.

6. Verfahren nach einem der vorstehenden Ansprüche, **dadurch gekennzeichnet, dass** die porenbildende Polysäure ausgewählt ist aus der Gruppe bestehend aus Weinsäure, Äpfelsäure und Zitronensäure, vorzugsweise Zitronensäure.

7. Verfahren nach einem der vorstehenden Ansprüche, **dadurch gekennzeichnet, dass** das Tensid eine Mischung aus einem anionischen Tensid und einem kationischen Tensid, vorzugsweise eine Mischung aus Natriumdodecylsulfat (SDS) und Tetradecyltrimethylammoniumbromid (TTAB) oder eine Mischung aus Natriumdodecylsulfat und Cetrimoniumbromid (CTAB), ist.

8. Verfahren nach einem der Ansprüche 1 bis 5, **dadurch gekennzeichnet, dass** das Tensid aus Alkylpolyglycosiden ausgewählt ist.

9. Verfahren nach einem der vorstehenden Ansprüche, **dadurch gekennzeichnet, dass** die Polyolkomponente 15 bis 60 %, vorzugsweise 20 bis 50 % und insbesondere 25 bis 45 % des Gesamtgewichts der Polyol- und Polysäurekomponenten ausmacht.

10. Verfahren nach einem der vorstehenden Ansprüche, **dadurch gekennzeichnet, dass** die expandierbare Zusammensetzung höchstens 50 Gew.-%, vorzugsweise höchstens 25 Gew.-%, mehr bevorzugt höchstens 15 Gew.-% und insbesondere höchstens 5 Gew.-% Wasser enthält.

11. Verfahren nach einem der vorstehenden Ansprüche, **dadurch gekennzeichnet, dass** der Katalysator ausgewählt ist aus Phosphor enthaltenden Verbindungen, vorzugsweise aus der Gruppe bestehend aus Alkalimetallhypophosphit, Alkalimetallphosphit, Alkalimetallpolyphosphat, Alkalimetallhydrogenphosphat, Phosphorsäure, Alkylphosphonsäure und einer Mischung aus zwei oder mehreren dieser Verbindungen, insbesondere Alkalimetallhypophosphit.

12. Verfahren nach einem der vorstehenden Ansprüche, **dadurch gekennzeichnet, dass** die expandierbare Zusammensetzung außerdem bis zu 30 Gew.-%, vorzugsweise bis zu 20 Gew.-%, insbesondere bis zu 10 Gew.-%, bezogen auf das Trockengewicht der gesamten expandierbaren Zusammensetzung, eines oder mehrerer mineralischen oder organischen Füllstoffe enthält.

13. Polyesterschaum, erhalten durch das Verfahren nach einem der vorstehenden Ansprüche.

14. Polyesterschaum nach Anspruch 13, **dadurch gekennzeichnet, dass** er eine Dichte zwischen 20 und 120 kg/m³, vorzugsweise zwischen 30 und 100 kg/m³, insbesondere zwischen 35 und 80 kg/m³, aufweist.

15. Verwendung einer Zusammensetzung, enthaltend
- eine Polyolkomponente, die zu mindestens 40 Gew.-% einen hydrierten Zucker nach der Formel CₙH₂ₙ₊₂Oₙ, worin n gleich 4, 5 oder 6 ist, umfasst
- eine Polysäurekomponente, umfassend eine porenbildende Polysäure, vorzugsweise ausgewählt aus Zitronensäure und α-hydroxylierten Dicarbonsäuren nach der Formel (I)
HOOC-(CHR¹)ₙ-CHOH-COOH,
worin
n eine ganze Zahl von 1 bis 4, vorzugsweise von 1 bis 3, insbesondere 1 oder 2 und ganz besonders bevorzugt 1 ist und
jedes R¹ unabhängig ein Wasserstoffatom, eine Hydroxylgruppe (-OH) oder eine Alkylgruppe, vorzugsweise eine C₁₋₄-Alkylgruppe, darstellt, und
- ein Tensid und
- einen Veresterungskatalysator
als expandierbare und wärmehärtbare Zusammensetzung zur Herstellung eines schaumartigen Dämmungsprodukts.

## Claims

1. A process for the manufacture of a thermoset polyester foam, comprising the following successive stages:
(a) providing an expandable and thermosetting composition containing:
- a polyol component comprising at least 40% by weight of a hydrogenated sugar of formula CₙH₂ₙ₊₂Oₙ, where n has the value 4, 5 or 6,
- a polyacid component comprising a porogenic polyacid preferably chosen from citric acid and α-hydroxylated dicarboxylic acids of formula (I):
HOOC-(CHR¹)ₙ-CHOH-COOH
where:
n is an integer ranging from 1 - 4, preferably from 1 - 3, especially 1 or 2 and very particularly preferably 1, and
each R¹ independently represents a hydrogen atom, a hydroxyl (-OH) group or an alkyl group, preferably a C₁₋₄ alkyl group,
- a surface-active agent, and
- a catalyst,
(b) introduction of the expandable and thermosetting composition into a mold or application of the expandable composition to a support,
(c) heating the expandable and thermosetting composition to a temperature at least equal to 135°C, preferably at least equal to 150°C, so as to react the polyol component with the polyacid component and to form a block of thermoset polyester foam.

2. The process as claimed in claim 1, **characterized in that** the expandable and thermosetting composition contains less than 1% by weight, preferably less than 0.1% by weight, of glycerol, of diglycerol or of glycerol oligomers.

3. The process as claimed in claim 1 or 2, **characterized in that** the polyol component and the polyacid component together represent at least 60%, preferably at least 70% and especially at least 80% of the dry weight of the expandable and thermosetting composition, the amounts or contents of polyol or polyacid components being meant for all the polyols or for all the polyacids present in the composition.

4. The process as claimed in one of the preceding claims, **characterized in that** the polyol component comprises at least 50% by weight, preferably at least 60% by weight, more preferably at least 80% by weight and ideally at least 90% by weight of a hydrogenated sugar of formula CₙH₂ₙ₊₂Oₙ, where n has the value 4, 5 or 6.

5. The process as claimed in one of the preceding claims, **characterized in that** the polyacid component comprises at least 50% by weight, preferably at least 65% by weight and especially at least 80% by weight of porogenic polyacid.

6. The process as claimed in one of the preceding claims, **characterized in that** the porogenic polyacid is chosen from the group consisting of tartaric acid, malic acid and citric acid, preferably citric acid.

7. The process as claimed in any one of the preceding claims, **characterized in that** the surface-active agent is a mixture of an anionic surfactant and of a cationic surfactant, preferably a mixture of sodium dodecyl sulfate (SDS) and of tetradecyltrimethylammonium bromide (TTAB) or a mixture of sodium dodecyl sulfate and of cetrimonium bromide (CTAB).

8. The process as claimed in any one of claims 1 to 5, **characterized in that** the surface-active agent is chosen from alkylpolyglycosides.

9. The process as claimed in any one of the preceding claims, **characterized in that** the polyol component represents from 15% to 60%, preferably from 20% to 50% and especially from 25% to 45% of the total weight of the polyol and polyacid components.

10. The process as claimed in any one of the preceding claims, **characterized in that** the expandable composition contains at most 50% by weight, preferably at most 25% by weight, more preferably at most 15% by weight and especially at most 5% by weight of water.

11. The process as claimed in any one of the preceding claims, **characterized in that** the catalyst is chosen from phosphorus-containing compounds, preferably from the group consisting of alkali metal hypophosphite, alkali metal phosphite, alkali metal polyphosphate, alkali metal hydrogenphosphate, phosphoric acid, alkylphosphonic acid and a mixture of two or more of these compounds, especially alkali metal hypophosphite.

12. The process as claimed in any one of the preceding claims, **characterized in that** the expandable composition additionally contains up to 30% by weight, preferably up to 20% by weight, especially up to 10% by weight, with respect to the dry weight of the total expandable composition, of one or more inorganic or organic fillers.

13. A polyester foam obtained by the process as claimed in any one of the preceding claims.

14. The polyester foam as claimed in claim 13, **characterized in that** it exhibits a density of between 20 and 120 kg/m³, preferably between 30 and 100 kg/m³, especially between 35 and 80 kg/m³.

15. The use of a composition containing:
- a polyol component comprising at least 40% by weight of a hydrogenated sugar of formula CₙH₂ₙ₊₂Oₙ, where n has the value 4, 5 or 6,
- a polyacid component comprising a porogenic polyacid preferably chosen from citric acid and α-hydroxylated dicarboxylic acids of formula (I):
HOOC-(CHR¹)ₙ-CHOH-COOH
where:
n is an integer ranging from 1 - 4, preferably from 1 - 3, especially 1 or 2 and very particularly preferably 1, and
each R¹ independently represents a hydrogen atom, a hydroxyl (-OH) group or an alkyl group, preferably a C₁₋₄ alkyl group,
- a surface-active agent, and
- an esterification catalyst,
as expandable and thermosetting composition for the manufacture of an insulating product of foam type.
